(19) Europäisches Patentamt / European Patent Office / Office européen des brevets

(11) **EP 4 714 535 A1**

(12) **EUROPEAN PATENT APPLICATION**
published in accordance with Art. 153(4) EPC

(43) Date of publication:
**25.03.2026 Bulletin 2026/13**

(21) Application number: **24807026.0**

(22) Date of filing: **26.04.2024**

(51) International Patent Classification (IPC):
**B01J 13/00** (2006.01) **B01J 3/00** (2006.01)
**C01F 17/235** (2020.01)

(52) Cooperative Patent Classification (CPC):
**B01D 11/00; B01J 3/00; B01J 13/00; C01F 17/235**

(86) International application number:
**PCT/JP2024/016455**

(87) International publication number:
**WO 2024/237072 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 JP 2023082624**

(71) Applicant: **Tohoku University**
**Sendai-shi, Miyagi 980-8577 (JP)**

(72) Inventors:
• **AJIRI, Tadafumi**
**Sendai-shi, Miyagi 980-8577 (JP)**

• **INOMATA, Hiroshi**
**Sendai-shi, Miyagi 980-8577 (JP)**
• **TOMAI, Takaaki**
**Sendai-shi, Miyagi 980-8577 (JP)**
• **YOKO, Akira**
**Sendai-shi, Miyagi 980-8577 (JP)**
• **SEI, Kimei**
**Sendai-shi, Miyagi 980-8577 (JP)**
• **TAKAO, Kenji**
**Sendai-shi, Miyagi 980-8579 (JP)**
• **NAKANISHI, Ryo**
**Sendai-shi, Miyagi 980-8579 (JP)**

(74) Representative: **Hoffmann Eitle**
**Patent- und Rechtsanwälte PartmbB**
**Arabellastraße 30**
**81925 München (DE)**

(54) **METHOD FOR DISPERSING ORGANIC MODIFIED NANOPARTICLES IN SOLVENT, AND LIQUID DISPERSION OF ORGANIC MODIFIED NANOPARTICLES**

(57) [Problem]
To make it possible to disperse organic-modified nanoparticles even into solvents having a relatively large molecular weight and to increase the degree of freedom in solvent selection.

[Solution]
The present invention is a method for dispersing organic-modified nanoparticles into a solvent, and includes a dispersion step of dispersing organic-modified nanoparticles having organic modifying groups on the surface into a solvent. The solvent contains a poorly dispersible solvent that is poorly dispersible with respect to the organic-modified nanoparticles and a predetermined molecule. With respect to van der Waals volume, under the temperature and pressure in the dispersion treatment step the van der Waals volume of the predetermined molecule is smaller than that of the solvent and smaller than that of the organic modifying groups, and with respect to the dispersion term $\delta_D$ of the Hansen solubility parameters the absolute value of the difference between the value at the pressure of the organic-modified nanoparticles and the value of the predetermined molecule is 1.2 $MPa^{1/2}$ or less, and the absolute value of the difference between the value at the pressure of the organic-modified nanoparticles and the value of the poorly dispersible mixed solvent containing the predetermined molecule is 1.2 $MPa^{1/2}$ or less.

[FIG. 3]

Test results of Example 1.

**Description**

[Technical Field]

The present invention relates to a Method for Dispersing Organic-Modified Nanoparticles into a Solvent and Organic-Modified Nanoparticle Dispersion.

[Background Art]

Fine particles, particularly particles of nanometer size (nanoparticles), exhibit various unique and excellent properties, characteristics, and functions, and are therefore expected to realize technologies that meet the demands for higher precision, miniaturization, and weight reduction in all materials and products beyond the current level. In this way, nanoparticles attract attention as materials that enable high functionality, high performance, high density, and advanced precision, including industrial and engineering materials such as nanostructure modifiers for ceramics, optical functional coating materials, electromagnetic shielding materials, secondary battery materials, fluorescent materials, electronic component materials, magnetic recording materials, and abrasive materials, as well as pharmaceutical and cosmetic materials. Recent fundamental research on nanoparticles has led to successive discoveries such as ultra-high functionality due to quantum size effects, the emergence of new physical properties, and the synthesis of new substances, drawing significant interest from the industrial sector.

To maintain such properties, nanoparticles need to retain their individual structures. However, since nanoparticles are often handled in solvents, it is important to prevent their aggregation in the solution phase caused by high surface energy. If viscosity caused by aggregation can be controlled, unit operations for nanoparticles become easier.

Accordingly, there is a method of changing the intermolecular interactions between nanoparticles and a solvent by the surface modification of nanoparticles. In this method, aggregation can be prevented by promoting the dispersion of the nanoparticles into the target solvent. As an organically modified nanoparticle synthesis method for mass continuous synthesis of organically modified nanoparticles, there has been proposed a method for recovering or collecting metal oxide nanoparticles, the method being characterized in that high-temperature and high-pressure water is used as a reaction field to cause a reaction between the surface of metal oxide nanoparticles and an organic modifier so as to bond, to the surface of the nanoparticles, a hydrocarbon group which may be substituted or may be unsubstituted via a bond selected from the group consisting of covalent bonds, ether bonds, ester bonds, bonds through an N atom, bonds through an S atom, metal-C- bonds, metal-C= bonds, and metal-(C=O)- bonds, thereby organically modifying the surface of the nanoparticles, and that

(1) metal oxide nanoparticles dispersed in an aqueous solution are precipitated and recovered,
(2) metal oxide nanoparticles dispersed in an aqueous solution are transferred into an organic solvent phase and recovered, or
(3) metal oxide nanoparticles are collected at an organic solvent phase-aqueous phase interface,

as disclosed in Patent Literature 1.

[Citation List]

[Patent Literature]

[Patent Literature 1] JP3925936B2

[Summary of the Invention]

[Problems to be Solved by the Invention]

In any method for dispersing organic-modified nanoparticles, it is important to increase the affinity between the organic modifying group and the solvent. For improvement of chemical affinity, it is important to reduce the difference in Hansen solubility parameters (HSP) between the organic modifying molecules and the solvent molecules. However, that alone does not enable the prediction of nanoparticle dispersibility. Recent studies have reported that the molecular volume of solvent molecules is also an important factor. Furthermore, according to recent computational science estimations, it has been reported that the formation of a self-organized structure of organic modifying groups results in a decrease in chemical interaction with the solvent.

Considering these effects, in the prior art, organic-modified nanoparticles can be dispersed only into solvents that have high chemical affinity and relatively small molecular weight, and cannot be dispersed into solvents having relatively large molecular weight. That is, there is a need to provide a technology that allows dispersion of organic-modified nanoparticles even into a solvent of relatively large molecular weight and that is poorly dispersible, and if this becomes possible, the degree of freedom in solvent selection can be increased.

The present invention has been made in view of such problems, and an object thereof is to enable dispersion of organic-modified nanoparticles even into a solvent having a relatively large molecular weight, thereby increasing the degree of freedom in solvent selection.

[Means for Solving the Problems]

As a result of intensive studies, the inventors have found that organic-modified nanoparticles can be dispersed by adding, as a third component, a predetermined molecule to a solvent that has a relatively large molecular weight and is poorly dispersible, and have thus completed the present invention. Specifically, the present invention provides the following:

According to the first aspect of the present invention, there is provided a method for dispersing organic-modified nanoparticles into a solvent, the method comprising a dispersion step of dispersing organic-modified nanoparticles having organic modifying groups on their surfaces into a solvent, wherein the solvent contains a poorly dispersible solvent with respect to the organic-modified nanoparticles and a predetermined molecule as a third component, and with respect to van der Waals volume: at the dispersion treatment temperature and pressure, the van der Waals volume of the predetermined molecule at the surface of the solvent is smaller than the van der Waals volume of the poorly dispersible solvent at the temperature and pressure, and the van der Waals volume of the predetermined molecule at the temperature and pressure is smaller than the van der Waals volume of the organic modifying group at the temperature and pressure, and with respect to the dispersion term $\delta_D$ of the Hansen solubility parameters: the absolute value of the difference between the value of the dispersion term $\delta_D$ of the organic modifying group at the temperature and pressure and the value of the dispersion term $\delta_D$ of the predetermined molecule is 1.2 $MPa^{1/2}$ or less, and the absolute value of the difference between the value of the dispersion term $\delta_D$ of the predetermined molecule at the temperature and pressure and the value of the dispersion term $\delta_D$ of the poorly dispersible solvent is 1.2 $MPa^{1/2}$ or less, thereby inducing an increase in the free volume of the organic-modified layer.

It is not possible to disperse organic-modified nanoparticles into a poorly dispersible solvent in a state where the predetermined molecule as the third component is not included. This means that the van der Waals volume of the poorly dispersible solvent is larger than the volume of the voids formed by the organic modifying groups, or that the free volume of the organic-modified layer is small and cannot include solvent molecules, so that the solvent cannot exhibit solubility with respect to the organic-modified nanoparticles, or, with respect to the dispersion term $\delta_D$ of the Hansen solubility parameters, the absolute value of the difference between the value of the dispersion term $\delta_D$ of the organic modifying group and the value of the dispersion term $\delta_D$ of the poorly dispersible solvent at the dispersion treatment temperature and pressure exceeds 1.2 $MPa^{1/2}$.

According to the invention of the first aspect, the van der Waals volume of the predetermined molecule as the third component is smaller than the van der Waals volume of the solvent and is also smaller than the van der Waals volume of the modifying group of the organic-modified nanoparticles. Therefore, when the predetermined molecule is added to the solvent, the predetermined molecule coordinates to the modifying group of the organic-modified nanoparticles, thereby reducing to 1.2 $MPa^{1/2}$ or less the absolute value of the difference between the values of the dispersion term $\delta_D$ of the mixed solvent and of the organic-modified nanoparticles, and drastically improving affinity. When the third component coordinates to the modified organic molecules, self-organization of the modified organic molecules can be suppressed, thereby increasing the free volume of the organic molecular layer, promoting coordination of solvent molecules, and drastically improving the affinity of the organic-modified nanoparticles with the solvent.

According to the invention of the first aspect, organic-modified nanoparticles can be dispersed even in a solvent having a relatively large molecular weight, and as a result, the degree of freedom in solvent selection is increased.

According to the second aspect of the present invention, there is provided the invention of the first aspect, wherein the dispersion step comprises a step of accelerating the dispersion of the organic-modified nanoparticles into the solvent by increasing the concentration of the predetermined molecule with the organic-modified nanoparticles placed in the solvent. This method corresponds to providing, as a pre-stage process of the dispersion step, a method that allows good dispersion of the organic-modified nanoparticles into the solvent for a certain period of time by bringing the organic-modified nanoparticles into contact in advance with the third component at a high concentration. That is, whereas the invention of the first aspect is an equilibrium-based invention, the invention of the second aspect relates to a dispersion step based on kinetic theory.

By bringing the organic-modified nanoparticles into contact in advance with the third component at a high concentration, the third component coordinates to the organic-modified layer of the organic-modified nanoparticles. The absolute value of the difference between the dispersion term $\delta_D$ of the Hansen solubility parameters of the organic modifying group containing the third component and the dispersion term $\delta_D$ of the solvent molecules can be greatly reduced, whereby it becomes possible to disperse the organic-modified nanoparticles even in a solvent having a relatively large molecular weight, in which the organic-modified nanoparticles could not originally be dispersed.

In the dispersion step, when using a temperature and pressure different from those of the above adjustment step, or when using a new dispersion solvent, the third component coordinated in a thermodynamic manner is desorbed, diffuses, and is released, and dispersibility decreases, but within the time constant thereof, dispersibility can be maintained, and thus, in a kinetic sense, the dispersion step can be made more effective.

According to the third aspect of the present invention, there is provided the invention of the first or second aspect, wherein the dispersion step comprises dispersing the organic-modified nanoparticles into the solvent by pressurizing to a predetermined pressure with the organic-modified nanoparticles placed in the solvent, and the temperature and pressure of the gas in contact with the surface of the solvent are a predetermined temperature and the predetermined pressure.

By pressurizing a solvent containing a poorly dispersible solvent and the third component to a predetermined pressure in the presence of a predetermined gas, the gas dissolves in the solvent, whereby the free volume of the mixed solvent becomes larger than that before pressurization. The gas is also distributed to the modifying groups of the organic-modified nanoparticles, whereby the free volume of the organic-modified layer becomes larger, and the absolute value of the difference between the dispersion term $\delta_D$ of the Hansen solubility parameters of the modifying group and the dispersion term $\delta_D$ of the mixed solvent also becomes smaller. As a result, it becomes possible to disperse the organic-modified nanoparticles even in a solvent in which the organic-modified nanoparticles could not originally be dispersed. When the pressure is returned to atmospheric pressure (0.1 MPa), the gas is desorbed and diffuses out, but high dispersibility can be maintained for 1 h to 14 h or more.

According to the fourth aspect of the present invention, there is provided the invention of the third aspect, wherein the organic-modified nanoparticles are purified nanoparticles.

In general, in a synthesis process of organic-modified nanoparticles, even after a washing step, a small number of impurities and unmodified modifying molecules are often physically adsorbed, but in the step of the invention of the fourth aspect, these impurities are replaced and separated by a high-pressure gas, so that the load of a precision washing step can be greatly reduced.

According to the invention of the fourth aspect, in comparison with dispersion of organic-modified nanoparticles that are not well purified, good dispersion is enabled, and even after depressurization to atmospheric pressure (0.1 MPa) after dispersion, a dispersed state can be maintained for 14 h or more.

According to the fifth aspect of the present invention, there is provided the invention of the third or fourth aspect, wherein the predetermined molecule is a gas or liquefied gas selected from carbon dioxide, hydrocarbon compounds, nitrogen oxide compounds, or fluorocarbon gases,

and the predetermined pressure is a pressurized state of 0.5 MPa or more, or not less than the saturated vapor pressure at the dispersion treatment temperature (provided that when the dispersion treatment temperature is at or above the critical temperature, the pressure is not less than the critical pressure).

A solution containing organic-modified nanoparticles may contain impurities and unreacted modifying molecules, which may reduce the dispersibility of the organic-modified nanoparticles. According to the invention of the fifth aspect, when the high-pressure gas has sufficient pressure, by making it a liquefied gas state or a supercritical fluid at or above the critical pressure, the gas acquires dissolving power, and the impurities contained in the solution are extracted by the high-pressure gas such as carbon dioxide, whereby the dispersibility of the organic-modified nanoparticles into a non-polar solvent is increased, and as a result, the degree of freedom in solvent selection is increased.

According to the sixth aspect of the present invention, there is provided the invention of any one of the first to fifth aspects, wherein the solvent is a mixed solvent comprising the poorly dispersible solvent as a main solvent and the predetermined molecule as a co-solvent.

The poorly dispersible solvent is poorly dispersible with respect to the organic-modified nanoparticles and cannot disperse the organic-modified nanoparticles therein.

In molecular dissolution systems, as represented by the entrainer effect, addition of a small amount of a co-solvent increases the affinity between the main solvent and the solute, thereby increasing the solubility. According to the invention of the sixth aspect, through the addition of a co-solvent to the poorly dispersible solvent, the absolute value of the difference between the dispersion term $\delta_D$ of the Hansen solubility parameters of the mixed solvent and the value of the dispersion term $\delta_D$ of the organic modifying group at the dispersion treatment temperature and pressure becomes smaller. The co-solvent is also coordinated and distributed to the organic modifying group, and the absolute value of the difference in the dispersion term $\delta_D$ becomes further smaller, to 1.2 $MPa^{1/2}$ or less. Therefore, it becomes possible to disperse the organic-modified nanoparticles even in a solvent in which the organic-modified nanoparticles could not originally be dispersed.

According to the invention of the sixth aspect, organic-modified nanoparticles can be dispersed even in a poorly dispersible solvent having a relatively large molecular weight, and as a result, the degree of freedom in solvent selection is increased.

According to the seventh aspect of the present invention, there is provided the invention of any one of the first to sixth aspects, wherein the organic-modified nanoparticles have, on their surfaces, a plurality of kinds of organic modifying groups, and, under the temperature and pressure of the dispersion step, the free volume of the organic-modified molecular layer is larger than the free volume of each single kind of organic-modified molecular layer, and the free volume of the organic-modified molecular layer is smaller than the van der Waals volume of the solvent molecules.

When only one kind of modifying group is present, the determining factor for dispersibility of the organic-modified nanoparticles is the chemical affinity between the solvent molecules and the modified molecular layer. For example, even if the absolute value of the difference in $\delta_D$ of the Hansen solubility parameters from that of the solvent is small, if the van der Waals volume of the solvent is larger than the range in which the organic-modified nanoparticles exhibit dispersibility, the organic-modified nanoparticles cannot be dispersed into the solvent.

According to the invention of the seventh aspect, the dispersibility of the organic-modified nanoparticles is further determined by the control of the free volume of the organic-modified layer.

When the surface is modified with a plurality of kinds of organic modifiers, regardless of the van der Waals volume of the solvent, if the van der Waals volumes of the first and second modifying groups are such that the volume of the voids (molecular pockets) formed between these modifying groups or with other modifying groups is larger than the van der Waals volume of the solvent, solvent molecules having a large van der Waals volume are also taken into the organic-modified nanoparticles, whereby the properties of the organic-modified nanoparticles become closer to those of the solvent molecules and affinity is greatly improved. As a result, it becomes possible to disperse the organic-modified nanoparticles even in a solvent having a relatively large molecular weight, into which the organic-modified nanoparticles could not originally be dispersed.

Recent molecular studies such as computational science have revealed that the dispersibility of organic-modified nanoparticles greatly depends on the self-organization of organic modifying groups or solvent molecules.

Self-organization corresponds to formation of a solid-phase-like structure by molecules, and it is well known that the solubility of a solidified molecule into a solvent is markedly reduced. Release of self-organization is equivalent to a change from a solid phase to a liquid phase, and when the degree of freedom of molecular motion increases thereby, the inclusion of solvent molecules is also promoted, which leads to an increase in the dispersibility of the particles in the solvent. The effect of adding the third component according to the first invention also causes a change in the freezing point. It is well known, for example in the effect of snow-melting agents, that the melting point is lowered by the addition of a third component, and a liquid phase can be formed at the same temperature. In addition to physical effects such as entry of the third component into the liquid phase, this also leads to a freezing point effect of the organic molecular layer, that is, the release of self-organization, which implies improvement in the degree of freedom of motion of organic molecules (liquid phase transition).

As in the invention of the seventh aspect, the suppression of self-organization is also possible by the structural design of the organic molecular layer. By modifying with a plurality of kinds of molecules, the modified molecules become a structure that is less likely to self-organize. To that end, if a domain structure is formed for each molecule, self-organization proceeds within the domain, however if the modification is random, formation of a self-organized structure is suppressed. This can be defined by the magnitude of the free volume of the modifying molecules, and if large, crystallization becomes less likely. As a method for random modification, for example, a step is effective in which, as in a supercritical hydrothermal synthesis field, the modifying molecules form a homogeneous phase while repeatedly undergoing adsorption and desorption at the surface and a bond-forming reaction occurs at the surface. In principle, since the structure is formed while the molecules move freely, it is natural that the free volume becomes large. In contrast, in organic modification under conditions where self-organization tends to occur at a lower temperature, even if the same amount is modified, the free volume becomes low.

In organic modification with a plurality of different types of molecules, by optimizing both the effect of forming a void structure that facilitates physical uptake of a solvent and the effect of forming a structure that increases free volume as described above, affinity with the solvent can be further greatly improved.

According to the eighth aspect of the present invention, there is provided an organic-modified nanoparticle dispersion, wherein organic-modified nanoparticles having organic modifying groups on their surfaces are dispersed in a solvent, the solvent comprising a poorly dispersible solvent with respect to the organic-modified nanoparticles and a predetermined molecule as a third component, and the dispersion having a transmittance of 0.8 or more at a wavelength of 450 nm when the concentration of the organic-modified nanoparticles is 1 wt%.

The invention of the eighth aspect corresponds to a different category (product invention) of the invention of the first aspect (method invention). This organic-modified nanoparticle dispersion has a degree of transparency such that the transmittance at a wavelength of 450 nm is 0.8 or more when the concentration of the organic-modified nanoparticles is 1 wt%. Therefore, according to the invention of the eighth aspect, an organic-modified nanoparticle dispersion dispersed in a solvent having a relatively large molecular weight can be provided.

According to the ninth aspect of the present invention, there is provided the invention of the eighth aspect, wherein the predetermined molecule is a gas or liquefied gas selected from carbon dioxide, hydrocarbon compounds, nitrogen oxide compounds, or fluorocarbon gases, and the organic-modified nanoparticle dispersion is contained in a pressure vessel pressurized at a predetermined pressure of 0.5 MPa or more.

When depressurized at the time of use, the gas distributed in the modifying molecules and in the solvent is desorbed, diffused, and released, so that dispersibility is gradually decreased, but within the time constant of such desorption, that is, for 1 h to 14 h or more, the dispersibility is maintained, and therefore dispersion work becomes possible even in cases where dispersion is originally difficult.

A solution containing organic-modified nanoparticles has impurities and unreacted modifiers physically adsorbed, which may reduce the dispersibility of the organic-modified nanoparticles. According to the invention of the ninth aspect, since impurities contained in the solution are replaced and separated by a high-pressure gas such as carbon dioxide, the dispersibility of organic-modified nanoparticles into a non-polar solvent is increased, and as a result, the degree of freedom in solvent selection is increased.

According to the tenth aspect of the present invention, there is provided the invention of the eighth or ninth aspect, wherein, with respect to the dispersion term $\delta_D$ of the Hansen solubility parameters, the absolute value of the difference between the value of the dispersion term $\delta_D$ of the organic-modified nanoparticles including the predetermined molecules and the solvent molecules under the temperature and pressure of the dispersion, and the value of the dispersion term $\delta_D$ of the mixed solvent at the predetermined pressure, is 1.2 MPa$^{1/2}$ or less.

According to the invention of the tenth aspect, an organic-modified nanoparticle dispersion dispersed in a solvent having a relatively large molecular weight can be provided.

According to the eleventh aspect of the present invention, there is provided the invention of any one of the eighth to tenth aspects, wherein the solvent is a mixed solvent comprising a first solvent and a second solvent, the first solvent being a poorly dispersible main solvent with respect to the organic-modified nanoparticles, and the second solvent, including in the case of being a gas, being a co-solvent having a van der Waals volume, under the temperature and pressure of the dispersion, smaller than that of the organic-modified molecular layer of the organic-modified nanoparticles, and, with respect to the dispersion term $\delta_D$ of the Hansen solubility parameters, having an absolute value of the difference from the value of the dispersion term $\delta_D$ of the organic-modified nanoparticles under the temperature and pressure of 1.2 MPa$^{1/2}$ or less.

According to the invention of the eleventh aspect, an organic-modified nanoparticle dispersion dispersed in a solvent that generally has a relatively large molecular weight and is poorly dispersible can be provided.

According to the twelfth aspect of the present invention, there is provided the invention of the eighth or ninth aspect, wherein the organic-modified nanoparticles have, on their surfaces, a plurality of kinds of organic modifying groups, and the free volume of the organic-modified molecular layer is larger than the van der Waals volume of the solvent molecules, and the free volume of the organic-modified molecular layer is larger than the free volume of each single kind of organic-modified molecular layer.

The van der Waals volume of the solvent is larger than the range in which the first modifying group, which is one of the plurality of kinds of organic modifying groups, exhibits solubility. Therefore, for organic-modified nanoparticles having only the first modifying group, even if the absolute value of the difference between $\delta_D$ of the Hansen solubility parameters of the organic modifying group and $\delta_D$ of the Hansen solubility parameters of the solvent molecules is small, the organic-modified nanoparticles cannot be dispersed into the solvent.

According to the invention of the twelfth aspect, the surface has a plurality of types of organic modifying groups, and the van der Waals volume of a second modifying group is larger than the van der Waals volume of the solvent. As a result, a modified chain arrangement (molecular pocket) that more easily interacts with solvent molecules having a large van der Waals volume is formed, whereby it becomes possible to disperse the organic-modified nanoparticles even in a solvent having a relatively large molecular weight, into which the organic-modified nanoparticles could not originally be dispersed. In addition, since a plurality of molecules coexist in the modified layer, self-organization is less likely to occur than in the case of a single molecule only, the free volume increases, and thereby solvent molecules are more easily coordinated and dispersibility can be increased. Accordingly, according to the invention of the twelfth aspect, an organic-modified nanoparticle dispersion dispersed in a solvent having a relatively large molecular weight can be provided.

[Effect of the Invention]

According to the present invention, organic-modified nanoparticles can be dispersed even into a solvent having a relatively large molecular weight, and the degree of freedom in solvent selection can be increased.

Brief Description of Drawings

[FIG. 1] FIG. 1 is a schematic diagram of the apparatus used in Test Example 1.

[FIG. 2] FIG. 2 is a diagram showing pressure setting conditions in Test Example 1.

[FIG. 3] FIG. 3 is a diagram showing test results of Example 1.

[FIG. 4] FIG. 4 is a correlation diagram visualizing, for various solvents, the polarity term $\delta_P$ and the dispersion term $\delta_D$ of the Hansen solubility parameters.

[FIG. 5] FIG. 5 is a correlation diagram visualizing, for various solvents, the van der Waals volume and the dispersion term $\delta_D$ of the Hansen solubility parameters.

[FIG. 6] FIG. 6 is a diagram showing the relationship, in mixed systems of decane or cyclohexane with carbon dioxide, among the pressure of carbon dioxide, the dispersion term $\delta_D$ of the Hansen solubility parameters, and the van der Waals volume.

[FIG. 7] FIG. 7 is a schematic diagram of the apparatus used in Test Example 2 and the like.

[FIG. 8] FIG. 8 is a diagram showing pressure setting conditions in Test Example 2.

[FIG. 9] FIG. 9 is a diagram showing the relationship between the wavelength of irradiated light by a spectrophotometer and the absorbance of a measurement sample (Example 2).

[FIG. 10] FIG. 10 is a diagram showing the relationship between the wavelength of irradiated light by a spectrophotometer and the absorbance of a measurement sample (Example 1).

[FIG. 11] FIG. 11 is a diagram showing, for the case where the measurement sample is decanoic-acid-modified nanoparticles after washing used in Example 2, the relationship between elapsed time after starting depressurization of $CO_2$ and the absorbance at a wavelength of 450 nm.

[FIG. 12] FIG. 12 is a diagram showing the relationship between the wavelength of irradiated light and the absorbance of a measurement sample for the case where the measurement sample is decanoic-acid-modified nanoparticles before washing used in Example 1.

[FIG. 13] FIG. 13 is a diagram showing the test results of Example 3, namely the relationship between elapsed time after starting addition of $CO_2$ and the absorbance at a wavelength of 450 nm.

[FIG. 14] FIG. 14 is a TEM image of composite organic-modified nanoparticles modified with both decanoic acid and stearic acid.

[Modes for Carrying Out the Invention]

Hereinafter, specific embodiments of the present invention will be described in detail, but the present invention is not limited to the following embodiments and can be implemented with appropriate modifications within the scope of the objectives of the present invention.

<Method for Dispersing Organic-Modified Nanoparticles into a Solvent>

The invention according to the present embodiment is a method that enables organic-modified nanoparticles obtained by known techniques (for example, the technique described in JP4336856B2) to be dispersed even into a solvent having a relatively large molecular weight. The invention according to the present embodiment comprises a dispersion step of dispersing organic-modified nanoparticles having organic modifying groups on their surfaces into a solvent.

{Organic-Modified Nanoparticles}

The kind of organic-modified nanoparticles is not particularly limited, and, for example, organic-modified nanoparticles obtained by the technique described in JP4336856B2 can be exemplified.

The kind of organic modifying group is not particularly limited, and examples include a linear or branched alkyl group which may be substituted, a cycloalkyl group which may be substituted, an aryl group which may be substituted, an aralkyl group which may be substituted, and a saturated or unsaturated heterocyclic group which may be substituted.

Examples of substituents include carboxyl groups, cyano groups, nitro groups, halogens, ester groups, amide groups, ketone groups, formyl groups, ether groups, hydroxyl groups, amino groups, sulfonyl groups, -O-, -NH-, and -S-.

The organic-modified nanoparticles may have one kind of organic modifying group on their surfaces, or may have a plurality of kinds of organic modifying groups on their surfaces.

{Solvent}

The solvent contains a poorly dispersible solvent that is poorly dispersible with respect to the organic-modified nanoparticles and a predetermined molecule as a third component.

[Poorly Dispersible Solvent]

In the present embodiment, "poorly dispersible" means that turbidity can be visually confirmed when the organic-modified nanoparticles are dispersed in the solvent.

The poorly dispersible solvent is not particularly limited as long as it is poorly dispersible with respect to the organic-modified nanoparticles under the dispersion treatment temperature and pressure. When the dispersion treatment temperature is room temperature, the dispersion treatment temperature is room temperature (25 °C), and when the dispersion treatment pressure is atmospheric pressure, the dispersion treatment pressure is atmospheric pressure (0.1 MPa).

As the poorly dispersible solvent, for example, a nonpolar solvent in which the polarity term $\delta_P$ of the Hansen solubility parameters is 0 can be mentioned. Specific examples of such a nonpolar solvent include cyclohexane, cyclopentane, hexane, octane, bicyclohexyl, decane, decalin, and dodecane.

[Predetermined Molecule]

The van der Waals volume of the predetermined molecule as the third component is smaller, at the dispersion treatment temperature and pressure, than the van der Waals volume of the poorly dispersible solvent at the dispersion treatment temperature and pressure. Further, the van der Waals volume of the predetermined molecule at the dispersion treatment temperature and pressure is smaller than the free volume of the organic-modified layer.

When the solvent is placed under atmospheric pressure, the dispersion treatment pressure, that is, the pressure of the gas in contact with the surface of the solvent, is atmospheric pressure (0.1 MPa). When the solvent is placed under a pressurized state, it is at the temperature and pressure of the dispersion treatment.

"Van der Waals volume" implies the volume of the region occupied by the target molecule at that temperature and pressure. "Free volume" implies a volume obtained by subtracting the van der Waals volume from the spatial volume in which molecules can freely move at the relevant temperature and pressure.

A solvent in a state not containing the predetermined molecule as the third component is poorly dispersible with respect to the organic-modified nanoparticles, and cannot disperse the organic-modified nanoparticles into the solvent. This means that the van der Waals volume of the solvent is larger than the range in which the organic-modified nanoparticles exhibit solubility, or, with respect to the dispersion term $\delta_D$ of the Hansen solubility parameters, the absolute value of the difference between the value of the dispersion term $\delta_D$ of the organic-modified nanoparticles and the value of the dispersion term $\delta_D$ of the nonpolar solvent at the dispersion treatment temperature and pressure exceeds 1.2 MPa$^{1/2}$.

"Hansen solubility parameters" refers to values used for predicting the solubility of a substance, published by Charles M. Hansen in 1967, and are composed of the intermolecular energy due to dispersion forces per molecular volume (dispersion term $\delta_D$), the energy due to intermolecular dipole-dipole interactions (polarity term $\delta_P$), and the energy due to intermolecular hydrogen bonding (hydrogen bonding term $\delta_H$).

In the present embodiment, the van der Waals volume of the predetermined molecule as the third component is smaller than the van der Waals volume of the solvent, and the absolute value of the difference between the value of the dispersion term $\delta_D$ of the modifying group of the organic-modified nanoparticles and the value of the dispersion term $\delta_D$ of the predetermined molecule is 1.2 MPa$^{1/2}$ or less. Therefore, by adding the predetermined molecule to the solvent, a good mixed state can be obtained, the average van der Waals volume of the mixed solvent can be kept lower than the van der Waals volume of the solvent, and, with respect to the dispersion term $\delta_D$, since the predetermined molecule coordinates to the modifying group of the organic-modified nanoparticles, affinity with the mixed solvent can be drastically improved, and as a result, the absolute value of the difference between the values of the dispersion term $\delta_D$ of the mixed solvent and of the organic-modified nanoparticles can be kept low. Furthermore, due to coordination of the third component, self-organization of the organic-modified layer is suppressed, thereby increasing the free volume of the organic-modified layer, and affinity with solvent molecules, and hence dispersibility of the organic-modified nanoparticles into the solvent, is further improved.

(First Aspect)

As a first aspect, it is preferable that the dispersion step includes, prior to the dispersion step, a step of accelerating the dispersion of the organic-modified nanoparticles into the solvent by increasing the concentration of the third component in a state where the organic-modified nanoparticles are placed in the solvent.

By increasing the concentration of the third component and causing it to coordinate to the organic modifying groups, self-organization of the organic molecular layer is suppressed and the free volume increases, and coordination of the solvent can be improved. Due to the coordination of the third component, the absolute value of the difference between the dispersion term $\delta_D$ of the Hansen solubility parameters of the organic-modified nanoparticles and the dispersion term $\delta_D$ of the solvent becomes lower. As a result, it becomes possible to disperse the organic-modified nanoparticles into a poorly dispersible solvent into which the organic-modified nanoparticles could not originally be dispersed.

The kind of the predetermined molecule is not particularly limited, but it is desirable that the van der Waals volume be smaller than the free volume of the organic molecular layer, and it may be a solvent molecule having good dispersibility. It may also be a gas, and examples include a gas or liquefied gas selected from carbon dioxide, hydrocarbon compounds, nitrogen oxide compounds, and fluorocarbon gases.

The kind of hydrocarbon compound is not particularly limited, and in general, one or more light hydrocarbon compounds selected from the group consisting of methane, ethane, ethylene, propane, and butane can be mentioned.

The kind of nitrogen oxide compound is not particularly limited, and in general, one or more compounds selected from the group consisting of nitric oxide, nitrogen dioxide, nitrogen trioxide, nitrous oxide, dinitrogen trioxide, dinitrogen tetroxide, and dinitrogen pentoxide can be mentioned.

When a gas or liquefied gas is used as the predetermined molecule, it is preferable that the dispersion step be a step of dispersing by pressurizing to a predetermined pressure in a state where the organic-modified nanoparticles are placed in the solvent. By pressurizing the poorly dispersible solvent to a predetermined temperature and pressure in the presence of a predetermined gas, gas molecules dissolve in the solvent and are distributed to the organic modifying groups. Therefore, the Hansen solubility parameters of the mixed solvent become closer to the solubility parameters of the organic-modified layer. The absolute value of the difference between the value of the dispersion term $\delta_D$ of the modifying layer and the value of the dispersion term $\delta_D$ of the mixed solvent becomes lower. As a result, it becomes possible to disperse the organic-modified nanoparticles even in a solvent having a relatively large molecular weight, into which the organic-modified nanoparticles could not originally be dispersed.

The pressure at the time of pressurization is preferably not less than the saturated vapor pressure at the dispersion treatment temperature (provided that when the dispersion treatment temperature is at or above the critical temperature, the pressure is not less than the critical pressure), but is not particularly limited as long as it is sufficient to allow the organic-modified nanoparticles to be dispersed in a poorly soluble solvent or in a mixed solvent with the predetermined molecule. For example, the lower limit of the pressure is preferably 0.5 MPa or more, and although a higher pressure is more effective, an optimum pressure is determined from operability.

The upper limit of the pressure is not particularly limited, but in view of convenience and safety of operation and the cost of pressure vessels and compressors of the equipment, the upper limit of the pressure is preferably 20 MPa or less, and more preferably 10 MPa or less.

By pressurizing a poorly soluble solvent or a mixed solvent with the predetermined molecule to a predetermined temperature and pressure in the presence of a gas, the absolute value of the difference between the value of the dispersion term $\delta_D$ of the Hansen solubility parameters of the mixed solvent and the value of the dispersion term $\delta_D$ of the organic-modified nanoparticles also becomes lower. Further, due to coexistence of the gas, the free volume of the organic molecular layer further increases, and affinity with the solvent becomes further greater.

A solution containing organic-modified nanoparticles may contain impurities and unreacted modifying molecules, which may reduce the dispersibility of the organic-modified nanoparticles. When a high-pressure gas has sufficient pressure and is made into a liquefied gas state or a supercritical fluid at or above the critical pressure, the gas acquires dissolving power, and since impurities contained in the solution are extracted by a high-pressure gas such as carbon dioxide, the dispersibility of the organic-modified nanoparticles into a poorly soluble solvent increases, and as a result, the degree of freedom in solvent selection increases.

It is preferable that the organic-modified nanoparticles be purified nanoparticles.

In general, purification of organic-modified nanoparticles is performed to make the physical properties of the organic-modified nanoparticles uniform by fractionation according to particle size and modification ratio of the nanoparticles, and to remove unreacted organic molecules used in the organic modification and a washing solvent used in a washing step. The purification method is not particularly limited, and any of centrifugation, membrane purification, solvent extraction, or chromatography may be used.

The van der Waals volume and the free volume can be evaluated for both liquid and gas phases using the van der Waals equation of state and various other real gas equations of state. Physical property values and critical constants of all substances can be obtained from physical property evaluations. Even for unknown substances, estimation is possible using physical property values of constituent molecules by a group contribution method.

For distribution of the third component including a gas to the organic modifying molecules or to the solvent, that is, for phase equilibrium estimation, intermolecular interaction parameters are further required, but they can be evaluated from a database or from differences in Hansen solubility parameters. Accordingly, since a volume fraction $\varphi_i$ can be evaluated for each component, average solubility parameters, average van der Waals volume, and free volume in a case where multiple components coexist can be evaluated. [Equation 1]

- **Hansen solubility parameter (HSP): dispersion term** ($\delta_D$)

$$\delta_D^{mix} = \phi_1\delta_1 + \phi_2\delta_2 \qquad (1)$$

[Equation 2]

- **Van der Waals volume ($V_{vdw}$)**

$$V_{vdw}^{mix} = \phi_1 V_{vdw1} + \phi_2 V_{vdw2} \qquad (2)$$

In the formula, φ denotes the volume fraction in the liquid phase, subscript 1 denotes carbon dioxide, and subscript 2 denotes the solvent.

When the mixed solvent is pressurized, the van der Waals volume of the mixed solvent at the predetermined pressure falls within the range in which the organic-modified nanoparticles exhibit solubility, and the difference between the value of the dispersion term δD of the organic-modified nanoparticles at 0.1 MPa and the value of the dispersion term δD of the mixed solvent at the predetermined pressure becomes 1 or less. As a result, it becomes possible to disperse the organic-modified nanoparticles even in a solvent having a relatively large molecular weight, into which the organic-modified nanoparticles could not originally be dispersed.

According to the invention described in the first aspect, the organic-modified nanoparticles can be dispersed even into a solvent having a relatively large molecular weight, and as a result, the degree of freedom in solvent selection is increased.

(Second Aspect)

As a second aspect, there can be mentioned an aspect in which the organic-modified nanoparticles are dispersed into a mixed solvent in which a poorly dispersible solvent is a main solvent and the predetermined molecule is a co-solvent.

The main solvent has low chemical affinity, that is, the difference between the Hansen solubility parameters and the solubility parameters of the organic modifying groups is large, or the van der Waals volume at the temperature and pressure of the dispersion step is larger than the range in which the organic modifying groups exhibit solubility, and is a poorly dispersible solvent.

The co-solvent has a van der Waals volume that is within the range in which the organic-modified nanoparticles exhibit solubility, and, with respect to the dispersion term $\delta_D$ of the Hansen solubility parameters, has an absolute value of the difference from the value of the dispersion term $\delta_D$ of the organic-modified nanoparticles at the relevant pressure of 1.2 MPa $^{1/2}$ or less.

The co-solvent is not particularly limited as long as the van der Waals volume and the dispersion term $\delta_D$ are within the ranges described above. By way of example of dispersing the organic-modified nanoparticles modified with decanoic acid into a mixed solvent, specific examples of the co-solvent include cyclohexane, bicyclohexyl, decane, decalin, and dodecane.

The volume ratio of the co-solvent to the main solvent is not particularly limited, but is preferably 0.1 parts by volume or more per 100 parts by volume of the main solvent, more preferably 0.5 parts by volume or more, and still more preferably 1.0 part by volume or more. Further, since the original purpose is to use the main solvent, the volume ratio of the co-solvent is preferably 20 parts by volume or less per 100 parts by volume of the main solvent, and more preferably 10 parts by volume or less.

In molecular solution systems, as represented by the entrainer effect, by adding a small amount of a co-solvent, the affinity between the main solvent and the solute is improved and solubility increases. According to the invention described in the second aspect, since a co-solvent whose van der Waals volume is smaller than the void volume formed in the organic modifying groups and is within the range in which the organic modifying groups exhibit solubility is added, even though the solvent has low affinity for the organic-modified nanoparticles and has a relatively large molecular weight and is a solvent in which the organic-modified nanoparticles could not originally be dispersed, it becomes possible to disperse the organic-modified nanoparticles. This is considered to be because molecules of a highly dispersible solvent having a small van der Waals volume act preferentially on surface modifying chains, and the entirety of the organic-modified nanoparticles, also including the co-solvent molecules coordinated on the surface exhibits high dispersibility with respect to the main solvent.

According to the invention described in the second aspect, the organic-modified nanoparticles can be dispersed even into a solvent having a relatively large molecular weight and low affinity for the organic-modified nanoparticles, and as a result, the degree of freedom in solvent selection is increased.

(Third Aspect)

As described above, the organic-modified nanoparticles may have one kind of organic modifying group on their surfaces, or may have a plurality of kinds of organic modifying groups on their surfaces. When the organic-modified nanoparticles have a plurality of kinds of organic modifying groups, these plurality of kinds of organic modifying groups are treated as the predetermined molecule.

Organic-modified nanoparticles having a plurality of kinds of organic modifying groups on their surfaces are obtained by known techniques (for example, the technique described in JP4336856B2), in which a mixture of a plurality of kinds of organic modifiers is used as the modifier. For example, composite organic-modified $CeO_2$ nanoparticles can be synthesized by a supercritical hydrothermal synthesis method using $Ce(OH)_4$ as a precursor and a mixture of decanoic acid (DA, number of carbons: 10) and stearic acid (SA, number of carbons: 18) as the modifier.

When the organic-modified nanoparticles have a plurality of kinds of organic modifying groups on their surfaces, it is preferable that the free volume of the organic-modified molecular layer under the temperature and pressure of the dispersion step be larger than the free volume of each single kind of organic-modified molecular layer. And it is preferable that the free volume of the organic-modified molecular layer under the temperature and pressure of the dispersion step be smaller than the van der Waals volume of the solvent molecules.

The van der Waals volume of the solvent is larger than the range in which a first modifying group, which is one of the plurality of kinds of organic modifying groups, exhibits solubility. Therefore, in the organic-modified nanoparticles in which only the first modifying group is the modifier, the organic-modified nanoparticles cannot be dispersed into the solvent.

The surface is modified with a plurality of kinds of organic modifiers, and regardless of the van der Waals volume of the solvent, the volume of voids (molecular pockets) formed in these modifying group layers is larger than the van der Waals volume of the solvent. Accordingly, solvent molecules having a large van der Waals volume are also taken into the organic-modified nanoparticles, whereby the properties of the organic-modified nanoparticles become closer to those of the solvent molecules and affinity is greatly improved. That is, it becomes possible to disperse the organic-modified nanoparticles even in a solvent having a relatively large molecular weight, into which the organic-modified nanoparticles could not originally be dispersed.

According to recent molecular studies, such as those in computational science, by providing a plurality of kinds of organic modifying groups on the surface, the self-organization of organic modifying groups or solvent molecules changes greatly, and the dispersibility of the organic-modified nanoparticles changes greatly. That is, improvement in dispersibility based on a completely different principle can be expected.

Self-organization corresponds to molecules forming a solid phase, and it is well known that the solubility of a solidified molecule into a solvent is markedly reduced. The release of self-organization is equivalent to a change from a solid phase to a liquid phase, and when the degree of freedom of molecular motion increases thereby, the inclusion of solvent molecules is also promoted, which leads to an increase in dispersibility in the solvent of the particles. The effect of adding a third component also produces a freezing point effect. It is well known, for example in the effect of snow-melting agents, that the melting point is lowered by adding a third component and a liquid phase can be formed at the same temperature. In addition to physical effects such as entry of the third component into the liquid phase, this also leads to a freezing point effect of the organic molecular layer, that is, the release of self-organization, that is, improvement in the degree of freedom of motion of organic molecules (liquid phase transition).

Suppression of self-organization is also possible by structural design of the organic molecular layer. By modifying with a plurality of kinds of molecules, the modified molecules become a structure that is less likely to self-organize. To that end, if a domain structure is formed for each molecule, self-organization proceeds within the domain, but if the modification is random, formation of a self-organized structure is suppressed. This can be defined by the magnitude of the free volume of the modifying molecules, and if large, crystallization becomes less likely. As a method for random modification, for example, a step is effective in which, as in a supercritical hydrothermal synthesis field, the modifying molecules form a homogeneous phase while repeatedly undergoing adsorption and desorption at the surface and a bond-forming reaction occurs at the surface. In principle, since the structure is formed while the molecules move freely, it is natural that the free volume becomes large. In contrast, in organic modification under conditions where self-organization tends to occur at a lower temperature, even if the same amount is modified, the free volume becomes low.

In organic modification with a plurality of kinds of molecules, by optimizing both the effect of forming a void structure that facilitates physical uptake of a solvent and the effect of forming a structure that increases free volume as described above, affinity with the solvent can be further greatly improved.

{Product: Organic-Modified Nanoparticle Dispersion}

It is preferable that the particles obtained using the method according to the present embodiment be supplied in a state dispersed in a solvent. The solvent contains a poorly dispersible solvent that is poorly dispersible with respect to the organic-modified nanoparticles and a predetermined molecule as a third component, and the transmittance at a wavelength of 450 nm when the concentration of the organic-modified nanoparticles is 1 wt% is 0.8 or more. Note that the transmittance is a value obtained by subtracting the absorbance from 1. Accordingly, "a transmittance of 0.8 or more" can also be expressed as "an absorbance of 0.2 or less."

The organic-modified nanoparticle dispersion obtained by the above method has a degree of transparency such that the transmittance at a wavelength of 450 nm when the concentration of the organic-modified nanoparticles is 1 wt% is 0.8 or more. Therefore, according to the invention described in the present embodiment, an organic-modified nanoparticle dispersion dispersed in a solvent having a relatively large molecular weight can be provided.

In the present embodiment, the transmittance is an index indicating dispersibility, and the higher it is, the better. The transmittance is 0.8 or more, more preferably 0.9 or more, and still more preferably 0.95 or more.

Examples of the predetermined molecule as the third component include a gas or a liquefied gas selected from carbon dioxide, hydrocarbon compounds, nitrogen oxide compounds, and fluorocarbon gases. It is preferable that the organic-modified nanoparticle dispersion be contained in a pressure vessel pressurized at a predetermined pressure of 0.5 MPa or more.

A solution containing the organic-modified nanoparticles may contain an unreacted modifier and impurities, which may inhibit dispersibility. According to the invention described in the present embodiment, since the unreacted modifier and impurities contained in the solution are extracted by a high-pressure gas such as carbon dioxide, the dispersibility of the organic-modified nanoparticles into a nonpolar solvent increases, and as a result, the degree of freedom in solvent selection increases.

When the gas pressure is reduced and returns to atmospheric pressure (0.1 MPa), the above absorbance increases with the passage of time, and the dispersed state of the organic-modified nanoparticles into a poorly dispersible nonpolar solvent can no longer be maintained. According to the invention described in the present embodiment, since the gas pressure is maintained, the dispersed state can be maintained for a long time.

Alternatively, it is preferable that the particles obtained by the method according to the present embodiment be supplied in a state dispersed in a mixed solvent containing a first solvent and a second solvent. The first solvent is a poorly dispersible main solvent with respect to the organic-modified nanoparticles. The second solvent is a co-solvent whose van der Waals volume at the temperature and pressure of the gas in contact with the surface of the mixed solvent is smaller than the void volume formed in the organic modifying groups, and, with respect to the dispersion term $\delta_D$ of the Hansen solubility parameters, has an absolute value of the difference from the value of the dispersion term $\delta_D$ of the organic-modified nanoparticles at the temperature and pressure of the gas in contact with the surface of the mixed solvent of 1.2 MPa$^{1/2}$ or less.

[Examples]

The present invention is described in detail below with reference to examples; however, the invention is not limited thereto.

<Test Example 1> Solvent dispersion of organic-modified nanoparticles

{Example 1} Solvent dispersion of organic-modified nanoparticles into decane (with additive)

[Preparation of organic-modified nanoparticles with decanoic acid]

In this test, $CeO_2$ nanoparticles were used as model nanoparticles. Decanoic acid (DA) was used as a modifier, and organic-modified $CeO_2$ nanoparticles (hereinafter also referred to as "OM nanoparticles") were synthesized by a supercritical hydrothermal synthesis method.

$Ce(OH)_4$ was dispersed in distilled water by ultrasonic treatment to obtain a $Ce(OH)_4$ suspension of 0.1 M. Thereafter, 2.5 mL of a 0.10 M aqueous suspension of $Ce(OH)_4$ and DA (molar ratio 1:3) were charged into a Hastelloy tube-type batch reactor having a volume of 5 mL. This reactor was placed in a heating furnace, heated first at 150 °C for 20 minutes, and then heated at 400 °C for 10 minutes. After the reactor was rapidly cooled to stop the reaction, the product was recovered using hexane, and the aqueous phase was removed. An equal volume of ethanol was added to the remaining organic phase, and unreacted substances were removed by centrifugation (9600 rpm, 20 minutes) to obtain OM nanoparticles.

[Solvent dispersion of OM nanoparticles into decane]

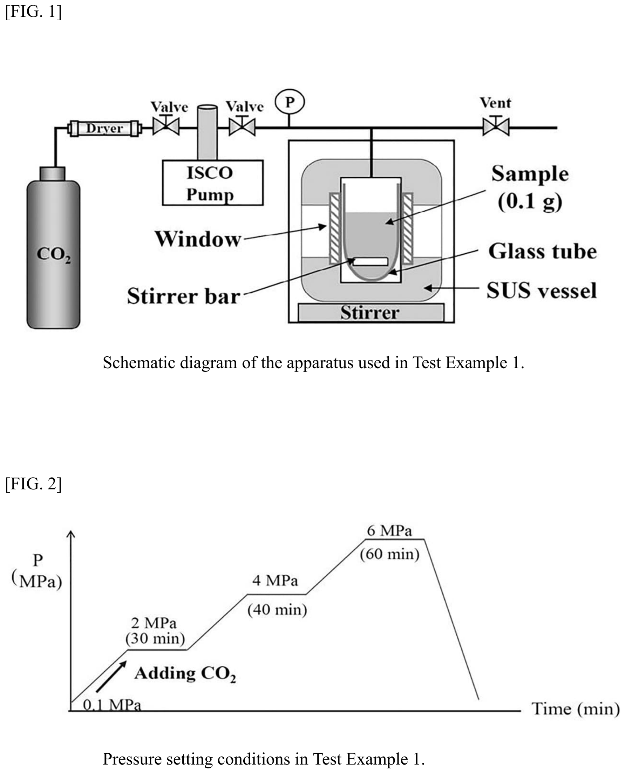

In the apparatus shown in FIG. 1, solvent dispersion was performed under the following conditions.

Nanoparticles: The above decanoic-acid-modified $CeO_2$ nanoparticles (OM nanoparticles).
Concentration of nanoparticles: 1 wt%
Solvent: Decane
Temperature: 40 °C
Additive: Carbon dioxide gas
Pressure: As shown in FIG. 2 (2, 4, and 6 MPa)

[Results]

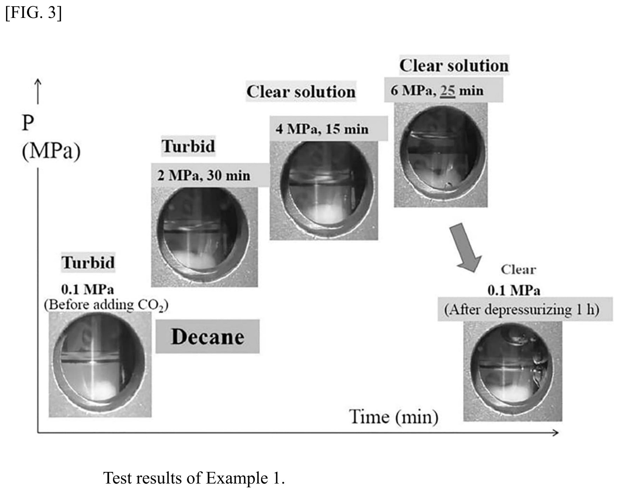

The results are shown in FIG. 3. When the pressure of carbon dioxide gas was 2 MPa, the OM nanoparticles were not dispersed in the solvent (decane), whereas when the pressure was 4 MPa, the OM nanoparticles were uniformly dispersed in the solvent (decane). The uniformly dispersed state was maintained even when the pressure was 6 MPa, and was also maintained after the pressure was returned to atmospheric pressure.

{Comparative Example 1}

Except that carbon dioxide gas was not added, solvent dispersion of OM nanoparticles into decane was attempted using the same method as in Example 1. However, the OM nanoparticles could not be uniformly dispersed in decane.

{Discussion}

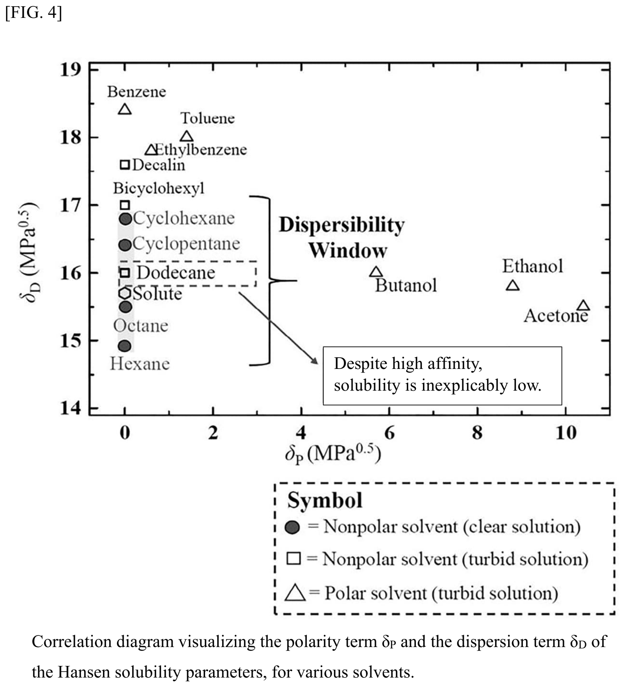

FIG. 4 is a correlation diagram visualizing, for various solvents, the polarity term $\delta_P$ and the dispersion term $\delta_D$ of the Hansen solubility parameters. As shown in FIG. 4, basically, if the difference in the dispersion term $\delta_D$ of the Hansen solubility parameters between the solvent and the organic-modified nanoparticles is 1.2 $MPa^{1/2}$ or less and both the solvent and the organic-modified nanoparticles have a polarity term $\delta_P$ of 0 $MPa^{1/2}$, the organic-modified nanoparticles can be dispersed into the solvent (nonpolar solvent). For example, the dispersion term $\delta_D$ of cyclohexane is 16.8 $MPa^{1/2}$, and the dispersion term $\delta_D$ of decanoic-acid-modified $CeO_2$ nanoparticles (OM nanoparticles) is 15.7 $MPa^{1/2}$. Accordingly, the difference in the dispersion term $\delta_D$ between the two is 1.2 $MPa^{1/2}$ or less. In addition, the polarity term $\delta_P$ of cyclohexane and of the OM nanoparticles are both 0 $MPa^{1/2}$. Therefore, the OM nanoparticles can be dispersed in cyclohexane.
Further, the dispersion term $\delta_D$ of decane is 16 $MPa^{1/2}$ or less, and the difference in the dispersion term $\delta_D$ between decane and the OM nanoparticles is 1.2 $MPa^{1/2}$ or less. The polarity term $\delta_P$ of decane is 0 $MPa^{1/2}$. Therefore, it appears that the OM nanoparticles can be dispersed in decane; however, in practice, under conditions of room temperature and atmospheric pressure, the OM nanoparticles cannot be dispersed in decane.

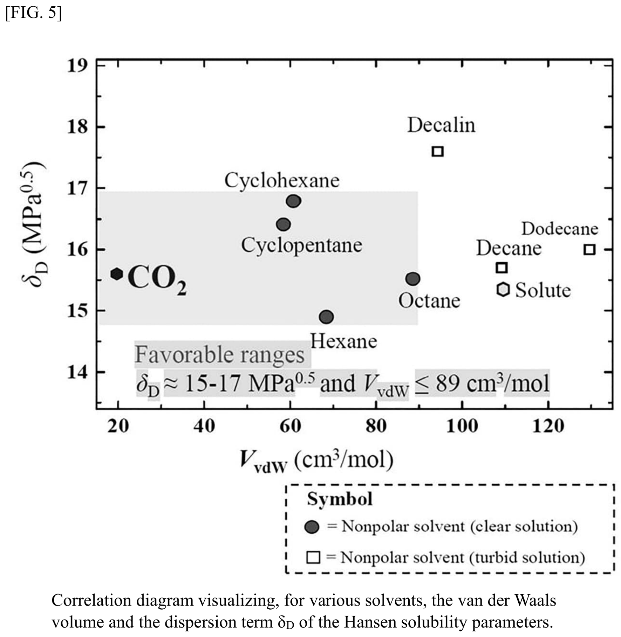

FIG. 5 is a correlation diagram visualizing, for various solvents, the van der Waals volume and the dispersion term $\delta_D$ of the Hansen solubility parameters. As shown in FIG. 5, when the OM nanoparticles are decanoic-acid-modified $CeO_2$ nanoparticles, if the van der Waals volume is 89 $cm^3\ mol^{-1}$ or less, the OM nanoparticles can be dispersed into the solvent (nonpolar solvent). For example, the van der Waals volume of cyclohexane is 61.4 $cm^3\ mol^{-1}$, which is 89 $cm^3\ mol^{-1}$ or less. Accordingly, the OM nanoparticles can be dispersed in cyclohexane.
In contrast, the van der Waals volume of decane is 129.6 $cm^3\ mol^{-1}$, which is outside the range of van der Waals volume (89 $cm^3\ mol^{-1}$ or less) that exhibits solubility for the OM nanoparticles. Therefore, despite the fact that, for decane, the difference in the dispersion term $\delta_D$ from that of the OM nanoparticles is 1.2 $MPa^{1/2}$ or less and the polarity term $\delta_P$ is 0 $MPa^{1/2}$, it is considered that, under conditions of room temperature and atmospheric pressure, the OM nanoparticles cannot be dispersed in decane.
Here, the van der Waals volume of carbon dioxide at 25 °C and 0.1 MPa is 19.7 $cm^3\ mol^{-1}$, which is significantly smaller than the van der Waals volume of the OM nanoparticles. Accordingly, the present inventors formulated a hypothesis that, if carbon dioxide is added to decane as an additive to bring the van der Waals volume of the mixture closer to the van der Waals volume of the OM nanoparticles, it might be possible to disperse the OM nanoparticles in decane, in which the OM nanoparticles cannot be dispersed at room temperature and atmospheric pressure. The present Example supports the correctness of this hypothesis.

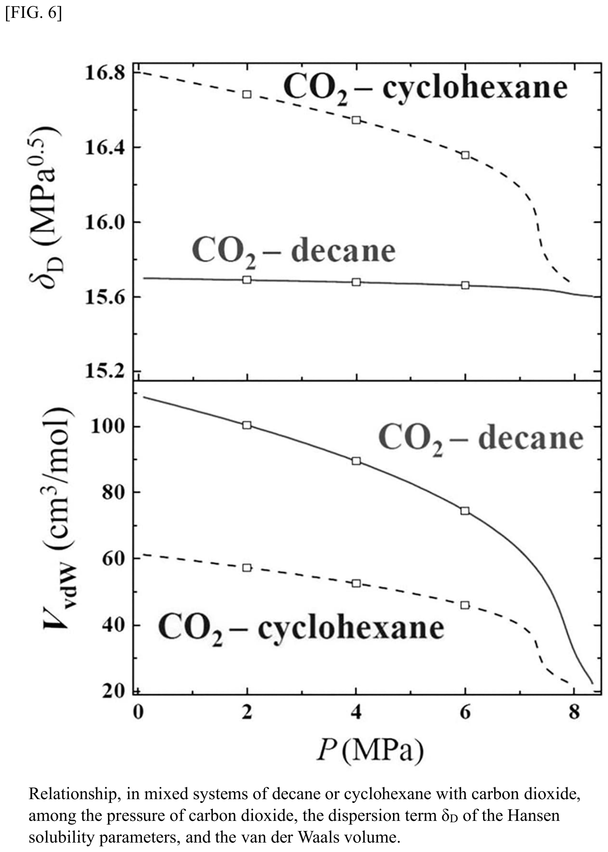

FIG. 6 is a diagram showing the relationship, in mixed systems of decane or cyclohexane with carbon dioxide, among the pressure of carbon dioxide, the dispersion term $\delta_D$ of the Hansen solubility parameters, and the van der Waals volume.
The van der Waals volume and the free volume can be evaluated for both liquid and gas phases using the van der Waals equation of state and various other real gas equations of state. Physical property values and critical constants of all substances can be obtained from physical property evaluations. Even for unknown substances, estimation is possible using physical property values of constituent molecules by a group contribution method.
For distribution of the third component including a gas to the organic modifying molecules or to the solvent, that is, for phase equilibrium estimation, intermolecular interaction parameters are further required, but they can be evaluated from a database or from differences in Hansen solubility parameters. Accordingly, since a volume fraction $\varphi_i$ can be evaluated for each component, average solubility parameters, average van der Waals volume, and free volume in a case where multiple components coexist can be evaluated.

[Equation 3]

- **Hansen solubility parameter (HSP): dispersion term** ($\delta_D$)

$$\delta_D^{\mathrm{mix}} = \phi_1 \delta_1 + \phi_2 \delta_2 \qquad (1)$$

[Equation 4]

- Van der **Waals** volume ($V_{vdw}$)

$$V_{\mathrm{vdw}}^{\mathrm{mix}} = \phi_1 V_{\mathrm{vdw}1} + \phi_2 V_{\mathrm{vdw}2} \qquad (2)$$

In the equation, $\varphi$ denotes the volume fraction in the liquid phase, subscript 1 denotes carbon dioxide, and subscript 2 denotes the solvent.

Attention is focused on the case where the solvent is a mixed solvent of decane and carbon dioxide. When the pressure is close to 0 MPa, the van der Waals volume exceeds 89 $cm^3$ $mol^{-1}$. Accordingly, even if the dispersion term $\delta_D$ of the Hansen solubility parameters is close to that of the OM nanoparticles, the OM nanoparticles cannot be dispersed into the mixed solvent.

In contrast, as the pressure increases, the van der Waals volume of the mixed solvent decreases, and when the pressure is 4 MPa, the van der Waals volume of the mixed solvent becomes 89 $cm^3$ $mol^{-1}$ or less. As a result, although, in the case of decane alone, the OM nanoparticles could not be dispersed because the molecular weight of the solvent is large, by making it a mixed system with carbon dioxide, it becomes possible to disperse the OM nanoparticles.

Next, attention is focused on the case where the solvent is a mixed solvent of cyclohexane and carbon dioxide. As described above, cyclohexane is a solvent that can disperse OM nanoparticles even by itself. However, when the solvent is made a mixed solvent of cyclohexane and carbon dioxide and the pressure of carbon dioxide is increased, the dispersion term $\delta_D$ of the Hansen solubility parameters decreases and approaches the value of the dispersion term $\delta_D$ of the OM nanoparticles. Accordingly, even for a solvent that can disperse OM nanoparticles by itself, making the solvent a mixed system with carbon dioxide has technical significance.

<Test Example 2> Solvent dispersion of washed organic-modified nanoparticles

{Example 2} Solvent dispersion of washed organic-modified nanoparticles into decane (with additive)

[Preparation of washed OM nanoparticles]

The washed OM nanoparticles obtained in Example 1 were dispersed in cyclohexane, and the suspension was slowly dropped while washing was performed with acetone in an amount 20 times that of cyclohexane under stirring. Thereafter, the particles were recovered by centrifugation, washed again by the same method, re-dispersed in cyclohexane, and left to stand at room temperature for one day to perform size classification. After size classification, the supernatant was recovered and vacuum freeze-dried to obtain washed OM nanoparticles.

When the primary average particle diameter of the obtained washed OM nanoparticles was measured with a transmission electron microscope (TEM, H-7650; Hitachi, Ltd.), the primary average particle diameter was 5.8 nm. Further, the modification ratio of decanoic acid on the surface of the $CeO_2$ nanoparticles was 4.9 molecules/$nm^2$.

[Solvent dispersion of washed OM nanoparticles into decane]

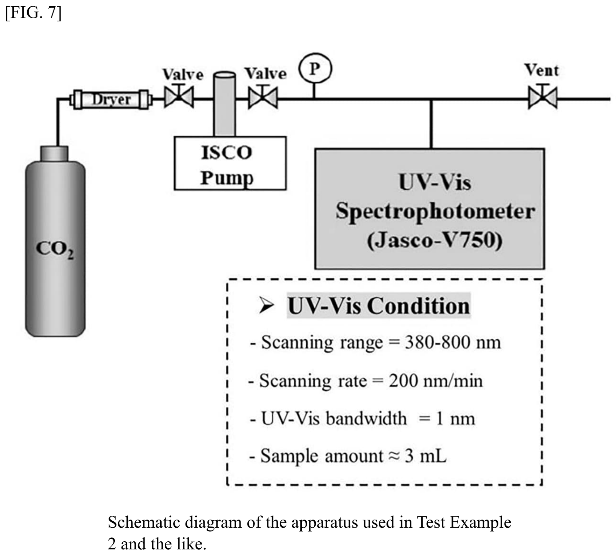

In Example 1, dispersibility had been evaluated visually, but in order to quantify this, solvent dispersion was performed using the apparatus shown in FIG. 7. In FIG. 7, the configuration differs from the apparatus of FIG. 1 in that a UV-visible spectrophotometer V-750 (manufactured by JASCO Corporation) was added. The conditions for solvent dispersion are as follows.

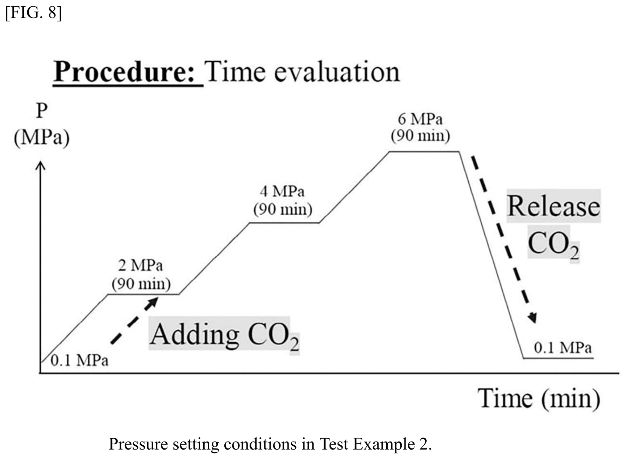

Nanoparticles: The above washed decanoic-acid-modified $CeO_2$ nanoparticles (washed OM nanoparticles)
Concentration of nanoparticles: 1 wt%
Solvent: Decane
Temperature: 40 °C
Additive: Carbon dioxide
Pressure: As shown in FIG. 8 (2, 4, and 6 MPa)

[Dispersibility when returned to atmospheric pressure]

After dispersion into the mixed solvent of decane and $CO_2$, the dispersibility of the washed OM nanoparticles into decane was evaluated for the decane solvent after depressurizing $CO_2$ from the mixed solvent, until 14 h had elapsed from the start of depressurization.

[Results]

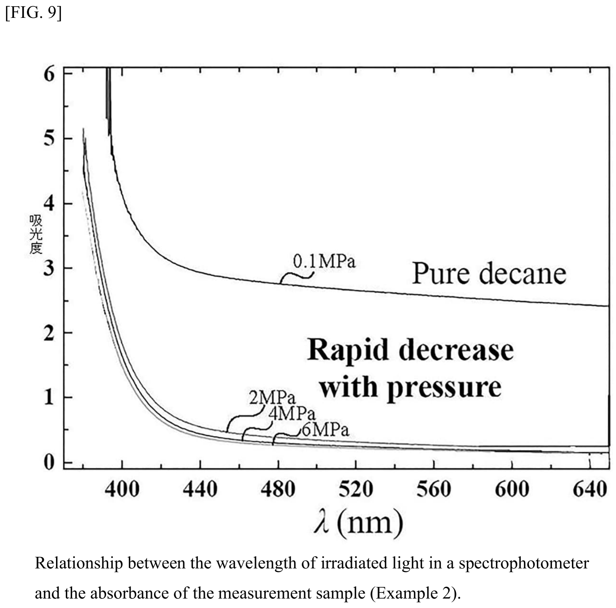

The results for when the washed OM nanoparticles were dispersed in the decane-$CO_2$ mixed solvent are shown in FIG. 9. FIG. 9 is a diagram showing the relationship between the wavelength of irradiated light by a spectrophotometer and the absorbance of a measurement sample (Example 2). Focusing on the absorbance at a wavelength of 450 nm of the irradiated light, although in Example 1 the OM nanoparticles could not be solvent-dispersed at a pressure of 2 MPa, according to Example 2, even at a pressure of 2 MPa, the washed OM nanoparticles can be solvent-dispersed. According to Example 2, by using washed OM nanoparticles, it can be said that the pressure of carbon dioxide required to disperse OM nanoparticles into the mixed solvent can be reduced.

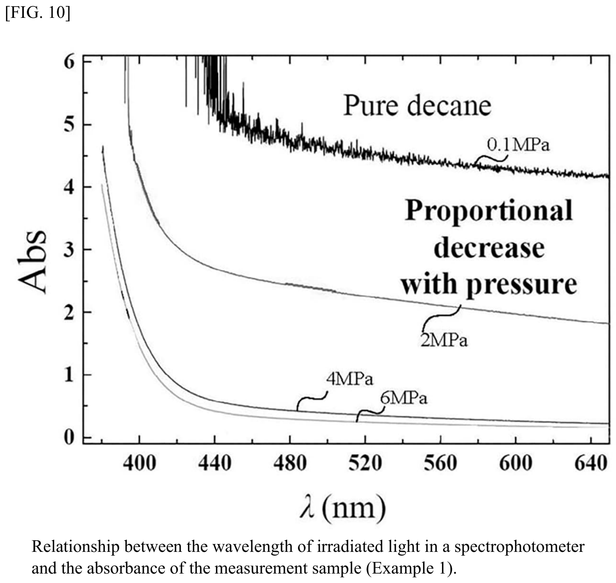

FIG. 10 shows, for the case where the measurement sample is the OM nanoparticles used in Example 1, that is, the unwashed OM nanoparticles, the relationship between the wavelength of irradiated light by the spectrophotometer and the absorbance of the measurement sample. Focusing on the absorbance at a wavelength of 450 nm of the irradiated light, a high absorbance still remains at a pressure of 2 MPa, and when the pressure is 4 MPa or more a low absorbance is obtained, suggesting that the OM nanoparticles can be dispersed in the solvent.

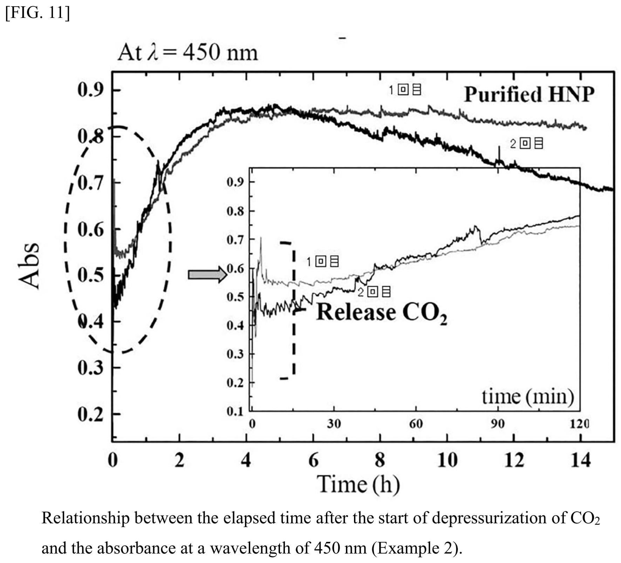

FIG. 11 is a diagram showing, for the case where the measurement sample is decanoic-acid-modified nanoparticles after washing as used in Example 2, the relationship between elapsed time after starting depressurization of $CO_2$ and the absorbance at a wavelength of 450 nm. According to FIG. 11, even after 14 h have elapsed from the start of depressurization, the absorbance remains at about 0.85, and it can be said that, despite depressurization of $CO_2$, the dispersibility of the washed OM nanoparticles into the solvent is sufficiently ensured.

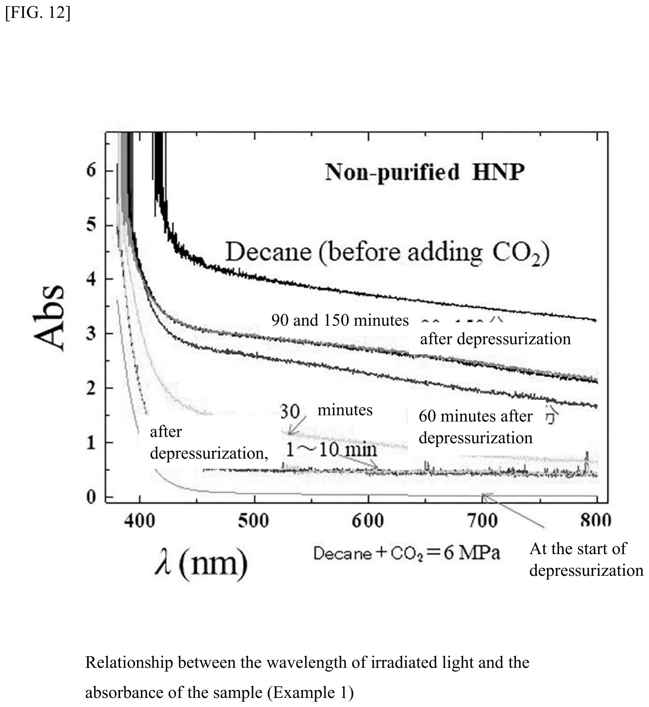

FIG. 12 is a diagram showing the relationship between the wavelength of irradiated light and the absorbance of a measurement sample for the case where the measurement sample is decanoic-acid-modified nanoparticles before washing used in Example 1. FIG. 12 shows the times at the start of $CO_2$ depressurization, after 1 to 60 minutes from the start of depressurization, and after 150 minutes from the start of depressurization. Focusing on the absorbance at a wavelength of 450 nm of the irradiated light, at the start of depressurization the absorbance is less than 0.5 and sufficient solvent dispersibility is present, but after 60 minutes from the start of depressurization the absorbance becomes approximately 3, and the solvent dispersibility decreases. Therefore, it can be said that the presence or absence of washing in obtaining the OM nanoparticles greatly contributes to solvent dispersibility after depressurization of an additive such as carbon dioxide.

<Test Example 3> Relationship between pressurization time of additive and solvent dispersibility

{Example 3}

[Solvent dispersion of washed OM nanoparticles into decane]

Using the apparatus shown in FIG. 7, solvent dispersion of the washed OM nanoparticles used in Example 2 into a mixed solvent of decane and carbon dioxide was performed. The conditions for solvent dispersion are as follows.

Nanoparticles: The same washed OM nanoparticles as in Example 2
Concentration of nanoparticles: 1 wt%
Solvent: Decane
Temperature: 40 °C
Additive: Carbon dioxide gas
Pressure: 0.8, 1, 2, and 6 MPa

[Results]

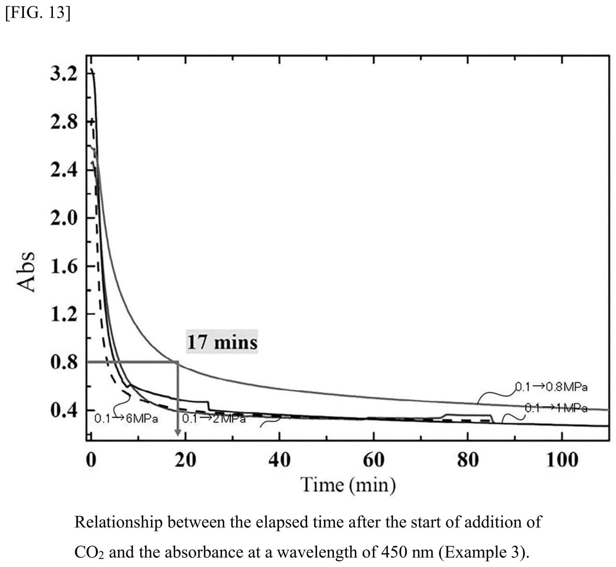

FIG. 13 is a diagram showing the test results of Example namely the relationship between elapsed time after starting addition of $CO_2$ and the absorbance at a wavelength of 450 nm. According to FIG. 13, even when the pressure of $CO_2$ is 0.8 MPa, a transmittance of 0.8 or more, which is an index indicating sufficient dispersibility, can be achieved in about 17 minutes after the start of addition. A higher pressure of $CO_2$ is preferable, and if the pressure of $CO_2$ is 1.2 MPa or more, a transmittance of 0.8 or more can be achieved in less than 10 minutes after the start of addition.

<Test Example 4> Dispersion of decanoic-acid-modified nanoparticles

The washed OM nanoparticles (decanoic-acid-modified nanoparticles) prepared by the same method as that in Example 2 were wetted with cyclohexane and then dispersed in toluene, which is a poor solvent.
Although aggregation progressed over a long period of time, immediately after dispersion good dispersibility was obtained. This is because cyclohexane coordinated to the decanoic-acid organic modifying layer, thereby increasing the free volume of the organic modifying layer and suppressing self-organization (solidification of the organic phase). Since cyclohexane, which is the third component under thermodynamic equilibrium, desorbs to and diffuses into the solvent molecules, affinity eventually decreases and aggregation proceeds. The fact that a dispersed state can be maintained for a while is extremely useful in processing operations and handling of nanoparticles consisting of many processes. This can also be provided as a product in the form of wetted nanoparticles.

<Test Example 5> Dispersion of OM nanoparticles into mixed solvents

{Example 5-1} Dispersion of OM nanoparticles into a mixed solvent (decane + cyclohexane)

To 100 parts by mass of a mixed solvent consisting of 100 parts by volume of decane and 1 part by volume of cyclohexane, 1 part by mass of the washed OM nanoparticles prepared by the same method as in Example 2 was added, subjected to ultrasonic treatment for 30 minutes, and then left standing overnight at room temperature. Thereafter, dispersibility was evaluated by visual observation and by observation using dynamic light scattering (DLS) with a Zetasizer Nano ZS (Malvern Instruments Ltd.). In the visual observation, a case with no precipitation or cloudiness was judged as "dispersed," and in the observation by dynamic light scattering, a case judged as monodisperse with an average hydrodynamic diameter of 10 nm or less was judged as "dispersed."
As a result, it was confirmed by both visual observation and observation by dynamic light scattering that the OM nanoparticles were appropriately dispersed.

{Example 5-2} Dispersion of OM nanoparticles into a mixed solvent (decane + hexane)

Except that 1 part by volume of cyclohexane was replaced with 1 part by volume of hexane, the dispersibility of the OM nanoparticles was evaluated by the same method as in Example 5-1. As a result, it was confirmed by both visual observation and observation by dynamic light scattering that the OM nanoparticles were appropriately dispersed.

{Example 5-3} Dispersion of OM nanoparticles into a mixed solvent (decalin + cyclohexane)

Except that the 100 parts by volume of decane were replaced with 100 parts by volume of decalin (also called decahydronaphthalene), the dispersibility of the OM nanoparticles was evaluated by the same method as in Example 4-1. As a result, it was confirmed by both visual observation and observation by dynamic light scattering that the OM nanoparticles were appropriately dispersed.

{Example 5-4} Dispersion of OM nanoparticles into a mixed solvent (decalin + hexane)

Except that the 100 parts by volume of decane were 100 parts by volume of decalin and the 1 part by volume of cyclohexane was 1 part by volume of hexane, the dispersibility of the OM nanoparticles was evaluated by the same method as in Example 4-1. As a result, it was confirmed by both visual observation and observation by dynamic light scattering that the OM nanoparticles were appropriately dispersed.

{Comparative Example 5-1} Dispersion of OM nanoparticles into a single solvent (decane)

Except that the mixed solvent consisting of 100 parts by volume of decane and 1 part by volume of cyclohexane was a single solvent consisting of decane, dispersibility of the OM nanoparticles was evaluated by the same method as that in Example 5-1. As a result, it was confirmed by both visual observation and observation by dynamic light scattering that the OM nanoparticles were not appropriately dispersed.

{Comparative Example 5-2} Dispersion of OM nanoparticles into a single solvent (decalin)

Except that the mixed solvent consisting of 100 parts by volume of decalin and 1 part by volume of cyclohexane was a single solvent consisting of decalin, the dispersibility of the OM nanoparticles was evaluated by the same method as that in Example 5-1. As a result, it was confirmed by both visual observation and observation by dynamic light scattering that the OM nanoparticles were not appropriately dispersed.

{Discussion}

The van der Waals volume of the main solvent, decane or decalin (first solvent), is larger than the range that exhibits solubility for the OM nanoparticles. Therefore, with the first solvent alone, the organic-modified nanoparticles cannot be dispersed in the first solvent.

In molecular solution systems, as represented by the entrainer effect, by adding a small amount of a co-solvent (second solvent), the affinity between the main solvent and the solute is improved and solubility increases. According to the invention described in the present embodiment, since a co-solvent (hexane) whose van der Waals volume is within the range that exhibits solubility with respect to the organic modifying groups is added to the first solvent, it is considered that, despite the fact that the solvent has a relatively large molecular weight and is a solvent in which OM nanoparticles could not originally be dispersed, it has become possible to disperse the OM nanoparticles. It is considered that molecules of a highly dispersible solvent having a small van der Waals volume acted preferentially on the surface modifying chains, and that the entirety of the organic-modified nanoparticles, including even the co-solvent molecules coordinated on the surface, exhibited high dispersibility with respect to the main solvent.

<Test Example 6> Dispersion of composite OM nanoparticles into a solvent

{Example 6} Dispersion of composite OM nanoparticles with decanoic acid and stearic acid into a solvent

[Preparation of composite OM nanoparticles]

Using $Ce(OH)_4$ as a precursor and a mixture of decanoic acid (DA, number of carbons: 10) and stearic acid (SA, number of carbons: 18) as a modifier, composite organic-modified $CeO_2$ nanoparticles were synthesized by a supercritical hydrothermal synthesis method.

$Ce(OH)_4$ was dispersed in distilled water by ultrasonic treatment to obtain a 0.10 M $Ce(OH)_4$ suspension. Thereafter, 2.5 mL of a 0.10 M aqueous suspension of $Ce(OH)_4$, DA, and SA (molar ratio 1 : 1.5 : 1.5) were charged into a Hastelloy tube-type batch reactor having a volume of 5 mL. This reactor was placed in a heating furnace, heated first at 150 °C for 20 minutes, and then heated at 400 °C for 10 minutes. After the reactor was rapidly cooled to stop the reaction, the product was recovered using hexane, and the aqueous phase was removed. An equal volume of ethanol was added to the remaining organic phase, and unreacted substances were removed by centrifugation (9600 rpm, 20 minutes). Next, the recovered particles were dispersed in cyclohexane, and the suspension was slowly dropped while washing was carried out with acetone in an amount 20 times that of cyclohexane under stirring. Thereafter, the particles were recovered by centrifugation, washed again by the same method, re-dispersed in cyclohexane, and left to stand at room temperature for one day to perform size classification. After size classification, the supernatant was recovered and vacuum freeze-dried to obtain composite organic-modified $CeO_2$ nanoparticles (hereinafter also referred to as "composite OM nanoparticles").

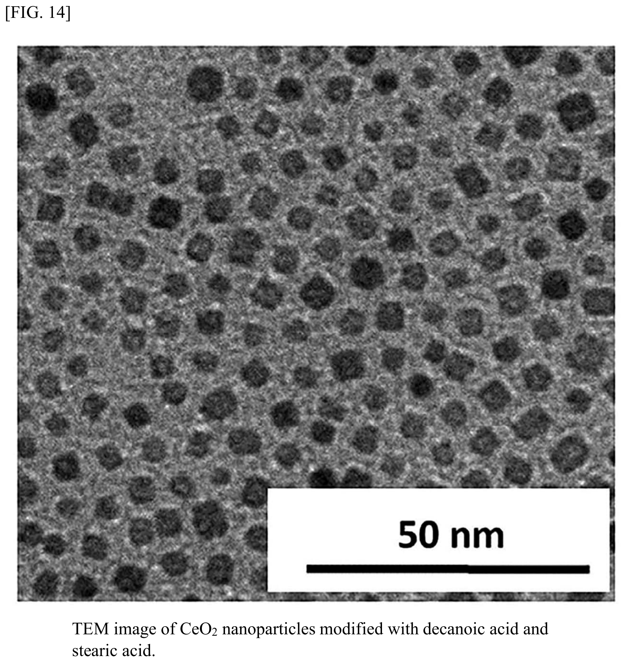

FIG. 14 is a TEM image of composite organic-modified nanoparticles modified with both decanoic acid and stearic acid. From the gaps between particles, it can be seen that the particles are well modified and dispersed with respect to the solvent (cyclohexane). The primary average particle diameter of the composite OM nanoparticles was 5.2 nm.

[Dispersibility into solvent]

To 100 parts by mass of a single solvent consisting of 100 parts by volume of dodecane, 1 part by mass of the above composite OM nanoparticles was added, subjected to ultrasonic treatment for 30 minutes, and then left standing overnight at room temperature. Thereafter, dispersibility was evaluated by visual observation and by observation using the dynamic light scattering method described above. As a result, it was confirmed by both visual observation and observation by dynamic light scattering that the OM nanoparticles were appropriately dispersed.

{Comparative Example 6-1} Dispersion of OM nanoparticles with decanoic acid into a solvent

Except that the composite OM nanoparticles were replaced with OM nanoparticles with decanoic acid as in Example 2, the dispersibility of the OM nanoparticles with decanoic acid was evaluated by the same method as that in Example 6-1. As a result, it was confirmed by both visual observation and observation by dynamic light scattering that the OM nanoparticles were not appropriately dispersed.

{Comparative Example 6-2} Dispersion of OM nanoparticles with stearic acid into a solvent

[Preparation of organic-modified nanoparticles with stearic acid]

Except that the modifier was stearic acid (SA), OM nanoparticles with stearic acid were obtained by the same method as that in Example 2.

[Dispersibility into solvent]

Except that the composite OM nanoparticles were replaced with OM nanoparticles with stearic acid, the dispersibility of the OM nanoparticles was evaluated by the same method as that in Example 5. As a result, it was confirmed by both visual observation and observation by dynamic light scattering that the OM nanoparticles were not appropriately dispersed.

{Discussion}

The surface of the OM nanoparticles is densely covered with an organic modifier, which prevents the penetration of a solvent having a large molecular size. Even if affinity to the alkyl chains is high, since penetration does not occur, dispersibility deteriorates.

According to Test Example 6, by co-modifying with carboxylic acids having different chain lengths, a geometric change of the surface of the modifier shell is expressed, creating further space at the ends of the modifier and in the region exposed to the solvent. Due to the difference in chain length, depressions are formed on the surface of the modifier shell, and a space that accepts penetration is created, so that the penetration of a solvent having a large molecular weight is considered to become possible.

The Hansen solubility parameter (HSP) value of dodecane is close to the HSP values of DA-modified nanoparticles and SA-modified nanoparticles, but these two single-molecule systems do not disperse at a high concentration of 1 mass%. This is considered to be because the size of dodecane prevents efficient penetration into the shell of the modifier. On the other hand, in the case of the two kinds of composite OM nanoparticles, since monodispersion at a concentration of 1 mass% was achieved, the interaction between the modifier and the solvent was strengthened. Although the arrangement of the two modifier molecules within the modifier shell that affects solvent penetration has not yet been sufficiently clarified, this result is considered to be due to the penetration of a solvent having a large molecular size into depressions caused by the difference in chain length between DA and SA.

Thus, by providing a plurality of kinds of organic modifying groups on the surface, voids are created and the solvent is taken up therein, thereby increasing the apparent solvent affinity of the organic-modified nanoparticles, and the improvement in dispersibility due thereto is effective. However, that is not all. According to recent molecular studies such as computational science, the dispersibility of organic-modified nanoparticles greatly depends on self-organization of organic modifying groups or solvent molecules. That is, improvement in dispersibility based on a principle completely different from the principles known heretofore can be expected.

Self-organization corresponds to molecules forming a solid-phase-like structure, and it is well known that the solubility of solidified molecules into a solvent is markedly reduced. The release of self-organization is equivalent to a change from a solid phase to a liquid phase, and when the degree of freedom of molecular motion increases thereby, inclusion of solvent molecules is also promoted, which leads to an increase in dispersibility in the solvent of the particles. The effect of adding a third component also produces a freezing-point effect. It is well known, for example in the effect of snow-melting agents, that the melting point is lowered by adding a third component and a liquid phase can be formed at the same temperature. In addition to physical effects such as entry of the third component into the liquid phase, this also leads to a freezing-point effect of the organic molecular layer, that is, release of self-organization, that is, improvement in the degree of freedom of motion of organic molecules (liquid phase transition).

Suppression of self-organization is also possible by structural design of the organic molecular layer. By modifying with a plurality of kinds of molecules, the modified molecules become a structure that is less likely to self-organize. To that end, if a domain structure is formed for each molecule, self-organization proceeds within the domain, but if the modification is random, formation of a self-organized structure is suppressed. The degree of suppression of self-organization can be defined by the magnitude of the free volume of the modifying molecules, and if large, crystallization becomes less likely. As a method for random modification, for example, a step is effective in which, as in a supercritical hydrothermal synthesis field, the modifying molecules form a homogeneous phase while repeatedly undergoing adsorption and desorption at the surface and a bond-forming reaction occurs at the surface. In principle, since the structure is formed while the molecules move freely, it is natural that the free volume becomes large. In contrast, in organic modification under conditions where self-organization tends to occur at a lower temperature, even if the same amount is modified, the free volume becomes low.

According to Example 6, in organic modification with a plurality of kinds of molecules, by optimizing both the effect of forming a void structure that facilitates physical uptake of a solvent and the effect of forming a structure that increases free volume as described above, it is considered that affinity with the solvent can be further greatly improved.

**Claims**

1. A method for dispersing organic-modified nanoparticles into a solvent, the method comprising:

   a dispersion step of dispersing organic-modified nanoparticles having organic modifying groups on their surfaces into a solvent,
   wherein the solvent contains a poorly dispersible solvent with respect to the organic-modified nanoparticles and a predetermined molecule as a third component,
   and with respect to van der Waals volume:

   at the dispersion treatment temperature and pressure, the van der Waals volume of the predetermined molecule at the surface of the solvent is smaller than the van der Waals volume of the poorly dispersible solvent at the temperature and pressure,
   and at the temperature and pressure, the van der Waals volume of the predetermined molecule is smaller than the van der Waals volume of the organic modifying group at the temperature and pressure,

   and with respect to the dispersion term $\delta_D$ of the Hansen solubility parameters:

   at the temperature and pressure, the absolute value of the difference between the value of the dispersion term $\delta_D$ of the organic modifying group and the value of the dispersion term $\delta_D$ of the predetermined molecule is 1.2 MPa$^{1/2}$ or less, and
   at the temperature and pressure, the absolute value of the difference between the value of the dispersion term $\delta_D$ of the predetermined molecule and the value of the dispersion term $\delta_D$ of the poorly dispersible solvent is 1.2 MPa$^{1/2}$ or less,

   thereby inducing an increase in the free volume of the organic-modified layer.

2. The method according to claim 1,
   wherein the dispersion step comprises a step of accelerating the dispersion of the organic-modified nanoparticles into the solvent by increasing the concentration of the predetermined molecule with the organic-modified nanoparticles placed in the solvent.

3. The method according to claim 1,

   wherein the dispersion step comprises dispersing the organic-modified nanoparticles into the solvent by pressurizing to a predetermined pressure with the organic-modified nanoparticles placed in the solvent,
   and the temperature and pressure of the gas in contact with the surface of the solvent are a predetermined temperature and the predetermined pressure.

4. The method according to claim 3,
   wherein the organic-modified nanoparticles are purified nanoparticles.

5. The method according to claim 3 or 4,

   wherein the predetermined molecule is a gas or liquefied gas selected from carbon dioxide, hydrocarbon compounds, nitrogen oxide compounds, or fluorocarbon gases,
   and the predetermined pressure is a pressurized state of 0.5 MPa or more, or not less than the saturated vapor pressure at the dispersion treatment temperature (provided that when the dispersion treatment temperature is at or above the critical temperature, the pressure is not less than the critical pressure).

6. The method according to claim 1,

   wherein the solvent is a mixed solvent comprising the poorly dispersible solvent and the predetermined molecule, the poorly dispersible solvent being a main solvent, and the predetermined molecule being a co-solvent.

7. The method according to claim 1,

   wherein the organic-modified nanoparticles have, on their surfaces, a plurality of kinds of organic modifying groups,
   and, under the temperature and pressure of the dispersion step, the free volume of the organic-modified molecular layer is larger than the free volume of each single kind of organic-modified molecular layer, and the free volume of the organic-modified molecular layer is smaller than the van der Waals volume of the solvent molecules.

8. An organic-modified nanoparticle dispersion,

   wherein organic-modified nanoparticles having organic modifying groups on their surfaces are dispersed in a solvent,
   the solvent comprising a poorly dispersible solvent with respect to the organic-modified nanoparticles and a predetermined molecule as a third component,
   and the dispersion having a transmittance of 0.8 or more at a wavelength of 450 nm when the concentration of the organic-modified nanoparticles is 1 wt%.

9. The dispersion according to claim 8,

   wherein the predetermined molecule is a gas or liquefied gas selected from carbon dioxide, hydrocarbon compounds, nitrogen oxide compounds, or fluorocarbon gases,
   and the organic-modified nanoparticle dispersion is contained in a pressure vessel pressurized at a predetermined pressure of 0.5 MPa or more.

10. The dispersion according to claim 9,
    wherein, with respect to the dispersion term $\delta_D$ of the Hansen solubility parameters, the absolute value of the difference between the value of the dispersion term $\delta_D$ of the organic-modified nanoparticles, under the temperature and pressure of the dispersion and in the presence of the predetermined molecule and solvent molecules, and the value of the dispersion term $\delta_D$ of the mixed solvent at the predetermined pressure, is 1.2 MPa$^{1/2}$ or less.

11. The dispersion according to claim 8,

    wherein the solvent is a mixed solvent comprising a first solvent and a second solvent,
    the first solvent being a poorly dispersible main solvent with respect to the organic-modified nanoparticles,
    and the second solvent, including in the case of being a gas, being a co-solvent having a van der Waals volume, under the temperature and pressure of the dispersion, smaller than that of the organic-modified molecular layer of the organic-modified nanoparticles, and, with respect to the dispersion term $\delta_D$ of the Hansen solubility parameters, having an absolute value of the difference from the value of the dispersion term $\delta_D$ of the organic-modified nanoparticles under the temperature and pressure of 1.2 MPa$^{1/2}$ or less.

12. The dispersion according to claim 8,

    wherein the organic-modified nanoparticles have, on their surfaces, a plurality of kinds of organic modifying groups,
    and the free volume of the organic-modified molecular layer is larger than the van der Waals volume of the solvent molecules, and the free volume of the organic-modified molecular layer is larger than the free volume of each single kind of organic-modified molecular layer.

[FIG. 1]

Schematic diagram of the apparatus used in Test Example 1.

[FIG. 2]

Pressure setting conditions in Test Example 1.

[FIG. 3]

Test results of Example 1.

[FIG. 4]

Correlation diagram visualizing the polarity term $\delta_P$ and the dispersion term $\delta_D$ of the Hansen solubility parameters, for various solvents.

[FIG. 5]

Correlation diagram visualizing, for various solvents, the van der Waals volume and the dispersion term $\delta_D$ of the Hansen solubility parameters.

[FIG. 6]

Relationship, in mixed systems of decane or cyclohexane with carbon dioxide, among the pressure of carbon dioxide, the dispersion term $\delta_D$ of the Hansen solubility parameters, and the van der Waals volume.

[FIG. 7]

Schematic diagram of the apparatus used in Test Example 2 and the like.

[FIG. 8]

Pressure setting conditions in Test Example 2.

[FIG. 9]

Relationship between the wavelength of irradiated light in a spectrophotometer and the absorbance of the measurement sample (Example 2).

[FIG. 10]

Relationship between the wavelength of irradiated light in a spectrophotometer and the absorbance of the measurement sample (Example 1).

[FIG. 11]

Relationship between the elapsed time after the start of depressurization of $CO_2$ and the absorbance at a wavelength of 450 nm (Example 2).

[FIG. 12]

Relationship between the wavelength of irradiated light and the absorbance of the sample (Example 1)

[FIG. 13]

Relationship between the elapsed time after the start of addition of $CO_2$ and the absorbance at a wavelength of 450 nm (Example 3).

[FIG. 14]

TEM image of $CeO_2$ nanoparticles modified with decanoic acid and stearic acid.

## INTERNATIONAL SEARCH REPORT

| International application No. |
|---|
| **PCT/JP2024/016455** |

**A.    CLASSIFICATION OF SUBJECT MATTER**

**_B01J 13/00_**(2006.01)i; **_B01J 3/00_**(2006.01)i; **_C01F 17/235_**(2020.01)i
FI:   B01J13/00 B; B01J3/00 A; C01F17/235

According to International Patent Classification (IPC) or to both national classification and IPC

**B.    FIELDS SEARCHED**

Minimum documentation searched (classification system followed by classification symbols)

B01J13/00; B01J3/00; C01F17/235

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

**C.    DOCUMENTS CONSIDERED TO BE RELEVANT**

| Category* | Citation of document, with indication, where appropriate, of the relevant passages | Relevant to claim No. |
|---|---|---|
| X | TOMAI, Takaaki et al., Solvent accommodation effect on dispersibility of metal oxide nanoparticle with chemisorbed organic shell, Journal of Colloid and Interface Science, 2021, vol. 587, pages 574-580<br>  particularly, tables 2, 3 | 1-2, 4, 6-8, 10-12 |
| X | SON, Won-Su et al., A novel sample preparation method on CeO2 nanoparticles with TEM grid embedded liquid CO2 displacement and supercritical CO2 drying for microscopic analysis, The Journal of Supercritical Fluids, 2019, vol. 152, 104559<br>  particularly, 2.1.Synthesis, 2.2.Washing | 1-6, 8-11 |

☐ Further documents are listed in the continuation of Box C.          ☐ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 June 2024** | **02 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3925936 B
- JP 4336856 B